(19) **Europäisches Patentamt European Patent Office Office européen des brevets**

(11) **EP 4 670 969 A1**

(12) **EUROPEAN PATENT APPLICATION**

(43) Date of publication:
**31.12.2025 Bulletin 2026/01**

(21) Application number: **25184386.8**

(22) Date of filing: **23.06.2025**

(51) International Patent Classification (IPC):
**B32B 17/10** (2006.01)      **G02B 5/30** (2006.01)
**G02F 1/1335** (2006.01)

(52) Cooperative Patent Classification (CPC):
**B32B 17/10174; B32B 17/10036; B32B 17/1022; B32B 17/10458; B32B 17/10504; B32B 17/10761; B32B 17/10788; G02B 5/30; G02F 1/133528;** B32B 7/023; B32B 2250/05; B32B 2250/40; B32B 2255/102; B32B 2307/202; B32B 2307/514

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **24.06.2024 KR 20240081839**

(71) Applicant: **Dongwoo Fine-Chem Co., Ltd.**
**Iksan-si, Jeollabuk-do 54631 (KR)**

(72) Inventors:
• **SHIN, Dong-Wun**
  **54631 Iksan-si (KR)**
• **KIM, Gil-Woong**
  **54631 Iksan-si (KR)**
• **OH, Pyoung-Yun**
  **54631 Iksan-si (KR)**

(74) Representative: **Betten & Resch**
**Patent- und Rechtsanwälte PartGmbB**
**Maximiliansplatz 14**
**80333 München (DE)**

(54) **OPTICAL LAMINATE AND SMART WINDOW INCLUDING THE SAME**

(57)      Disclosed is an optical laminate including: a first laminate comprising a first polarizing plate and a first transparent conductive layer; a second laminate opposite to the first laminate and comprising a second polarizing plate and a second transparent conductive layer; and a liquid crystal layer disposed between the first laminate and the second laminate, wherein the first laminate and the second laminate each has a Martens hardness (HM) of 100 N/mm$^2$ to 430 N/mm$^2$ and an elastic recovery rate (nIT) of 40% to 87%, as measured when a pressing load of 1 mN is applied thereto for 15 seconds using a nanoindenter. Also disclosed is a smart window including the optical laminate. A polarizing plate-transparent conductive layer laminate positioned above and below the liquid crystal layer is not deformed due to its excellent hardness and may be recovered after being compressed, due to its excellent elastic recovery rate.

**FIG. 1**

EP 4 670 969 A1

## Description

### BACKGROUND

1. Technical Field

The present disclosure relates to an optical laminate and a smart window including the same.

2. Related Art

In general, there are many cases in which an external light blocking coating is applied to a glass window of a means of transportation such as a vehicle. However, the transmittance of a conventional glass window of a means of transportation is fixed, and the transmittance of the external light blocking coating is also fixed. Therefore, the overall transmittance of the conventional window of the means of transportation is fixed, which may cause an accident. For example, when the overall transmittance is preset low, there is no problem during day when ambient light is sufficient. However, there is a problem in that it is difficult for a driver or the like to properly check the surroundings of the means of transportation at night when ambient light is insufficient. Alternatively, when the overall transmittance is preset high, there is a problem of causing glare to a driver or the like during day when ambient light is sufficient. Accordingly, an optical laminate capable of changing the transmittance of light when a voltage is applied has been developed. For example, Japanese Patent Application Publication No. 2018-010035 discloses a transmittance variable optical laminate including a transparent conductive layer formed on a polycarbonate (PC) substrate having a predetermined thickness.

Meanwhile, such an optical laminate is manufactured by interposing a liquid crystal layer between two laminate structures, each including a polarizing plate and a transparent conductive layer, and has a problem in that the polarizing plate and/or the transparent conductive layer are/is not recovered after being compressed against the liquid crystal layer in the process of pressing the liquid crystal layer down during the manufacturing process of the optical laminate, and thus bubbles and black spots occur and the optical laminate is not smoothly driven.

In particular, when a composite layer is formed by bringing a polarizing plate and a transparent conductive layer into direct contact with each other without including a separate substrate for forming a conductive layer of a transmittance variable optical laminate for the purpose of simplifying the manufacturing process of the transmittance variable optical laminate and reducing the thickness thereof, the transmittance variable optical laminate generally has a small thickness because the separate substrate is not included, but additional development may be required to improve mechanical properties or to achieve excellent appearance quality. Therefore, there is a need to develop a polarizing plate and a transparent conductive layer laminate, which have excellent appearance and mechanical properties while having a small thickness and are particularly suitable for a smart window.

[Prior Art Documents]

[Patent Documents]

(Patent Document 1) Japanese Patent Application Publication No. 2018-010035

### SUMMARY

An object of the present disclosure is to provide an optical laminate in which a polarizing plate and a transparent conductive layer are formed in direct contact with each other so that the Martens hardness and elastic recovery rate of the polarizing plate-transparent conductive layer laminate is adjusted, thus minimizing the occurrence of bubbles and black spots and making driving of the optical laminate smooth.

Another object of the present disclosure is to provide an optical laminate including a polarizing plate-transparent conductive layer laminate having Martens hardness and elastic recovery rate suitable for a smart window, and a smart window including the same.

However, the objects of the present disclosure are not limited to the objects mentioned above, and other objects not mentioned will be clearly understood by those skilled in the art from the following description.

The present disclosure relates to an optical laminate including: a first laminate including a first polarizing plate and a first transparent conductive layer; a second laminate opposite to the first laminate and including a second polarizing plate and a second transparent conductive layer; and a liquid crystal layer disposed between the first laminate and the second laminate, wherein the first laminate and the second laminate each have a Martens hardness (HM) of 100 N/mm$^2$ to 430 N/mm$^2$ and an elastic recovery rate (nIT) of 40% to 87%, as measured when a pressing load of 1 mN is applied to the surface of each of the first and second laminates in the lamination direction for 15 seconds using a nanoindenter.

In one embodiment of the present disclosure, the first transparent conductive layer and the second transparent conductive layer may each independently include at least one selected from the group consisting of a transparent conductive oxide, a metal, a carbonaceous material, a conductive polymer, a conductive ink, and nanowires.

In one embodiment of the present disclosure, the first polarizing plate and the second polarizing plate may each independently be one of an iodine-based polarizing plate, a polyene-based polarizing plate, and a dye-based polarizing plate.

In one embodiment of the present disclosure, the first polarizing plate and the second polarizing plate may each independently have a thickness of 30 to 300 $\mu$m.

In one embodiment of the present disclosure, the first polarizing plate and the second polarizing plate may each independently include a hard coating layer, wherein the hard coating layer may include an inorganic filler.

In another example of the present disclosure, the inorganic filler may include silica particles having an average particle size of 20 nm or less.

In another example of the present disclosure, the hard coating layer may be formed to a thickness of 3 to 25 $\mu$m.

In one embodiment of the present disclosure, the optical laminate may further include a first glass on an outer portion of the first laminate may further include a second glass at an outer portion of the second laminate.

In one embodiment of the present disclosure, the optical laminate may further include a first bonding layer between the first laminate and the first glass and a second bonding layer between the second laminate and the second glass, wherein the first and second bonding layers may each include at least one selected from poly vinyl butyral (PVB) and ethylene vinyl acetate (EVA).

In one embodiment of the present disclosure, at least one of the first transparent conductive layer and the second transparent conductive layer may be formed in direct contact with the first polarizing plate or the second polarizing plate without including a separate substrate therebetween.

In one embodiment of the present disclosure, at least one of the first polarizing plate and the second polarizing plate may include at least one functional layer selected from the group consisting of a protective layer, a retardation matching layer, and a refractive index-matching layer.

In one embodiment of the present disclosure, the optical laminate may further include at least one of a pressure-sensitive adhesive layer and a UV-absorbing layer.

The present disclosure also relates to a smart window including the optical laminate according to one or more embodiments of the present disclosure.

According to the present disclosure, it is possible to manufacture an optical laminate, particularly an optical laminate suitable for a smart window, in which the Martens hardness and elastic recovery rate of the polarizing plate-transparent conductive layer laminates positioned above and below the liquid crystal layer are adjusted so that the occurrence of bubbles and black spots is minimized and the function of varying transmittance is smoothly implemented.

In addition, the optical laminate according to the present disclosure may have a significantly reduced thickness compared to a conventional optical laminate, because the conductive layer is formed directly on one surface of the polarizing plate and a separate substrate for forming the conductive layer is not included.

Furthermore, since the polarizing plate-transparent conductive layer laminate has excellent Martens hardness and elastic recovery rate as described above, the optical laminate is strong despite having a small thickness.

## BRIEF DESCRIPTION OF THE DRAWINGS

FIG. 1 shows the structure of an optical laminate according to one embodiment of the present disclosure.
FIG. 2 shows the structure of a polarizing plate-transparent conductive layer laminate whose compressive property is to be evaluated according to one embodiment of the present disclosure.
FIG. 3a is a cross-sectional view of an optical laminate according to an embodiment of the present disclosure.
FIG. 3b is a cross-sectional view of an optical laminate of Comparative Example 1 used in the experimental example of the present disclosure.
FIGS. 4a to 4e show the laminated structures of polarizing plates according to one or more embodiments of the present disclosure.

## DETAILED DESCRIPTION

The present disclosure relates to an optical laminate including: a first laminate including a first polarizing plate and a first transparent conductive layer; a second laminate opposite to the first laminate and including a second polarizing plate and a second transparent conductive layer; and a liquid crystal layer disposed between the first laminate and the second laminate, wherein the first laminate and the second laminate each have a Martens hardness (HM) of 100 N/mm$^2$ to 430

N/mm$^2$ and an elastic recovery rate (nIT) of 40% to 87%, and a smart window including the same.

More specifically, the Martens hardness (HM) and elastic recovery rate (nIT) of each of the first laminate and the second laminate may be adjusted within the ranges of 100 N/mm$^2$ to 430 N/mm$^2$ and 40% to 87%, respectively, as measured when a pressing load of 1 mN is applied to the surface of each of the first and second laminates in the lamination direction for 15 seconds using a nanoindenter after fixing each of the first and second laminates to glass using a pressure-sensitive adhesive. The pressure-sensitive adhesive is not particularly limited in type or thickness as long as it is applied for the purpose of fixing each of the first laminate and the second laminate onto the nanoindenter. The pressure-sensitive adhesive may be used within a range that does not affect the Martens hardness of the first laminate and the second laminate.

In one embodiment of the present disclosure, if the Martens hardness of each of the first laminate and the second laminate is less than 100 MPa, the impact resistance may be reduced, and if it is more than 430 MPa, the bending resistance may be reduced.

The optical laminate and smart window of the present disclosure have an advantage in that they may be manufactured without appearance defects such as bubbles and black spots, and thus smoothly perform the function of varying transmittance, because the first laminate and the second laminate maintain their shape without being deformed, due to their excellent Martens hardness, and may be recovered after being compressed, due to their excellent elastic recovery rate.

In the present disclosure, the Martens hardness is a hardness measured in a state in which a test load is applied (indentation). The Martens hardness may be a value obtained from the load-indentation depth curve when the load increases. The Martens hardness includes both plastic and elastic deformation components. The Martens hardness is defined for a square pyramid indenter and a triangular pyramid indenter. Specifically, as expressed in Equation 1 below, the Martens hardness is defined as a value obtained by dividing the test load F by the surface area As of the indenter penetrating beyond the zero point of the contact.

<Equation 1>

$$\text{Martens hardness} = F/As$$

The Martens hardness is obtained from a load-indentation depth test, for example, according to the method specified in ISO14577. An example of the specific measurement method is as follows. It is performed according to the indentation test procedure specified in ISO14577. As a tester, an ultra-micro hardness tester (e.g., trade name "Fischer Scope 100C", manufactured by Fisher Instruments) is used, and as an indenter, a pyramidal diamond indenter with a square base and a facing angle of 136° is used. Specifically, a target to be measured is fixed onto a glass surface of several hundred micrometers thickness using a pressure-sensitive adhesive having a thickness of several micrometers, and then the load application time and the load removal time are each set to 15 seconds to conduct the evaluation. The temperature during the test is set to 23°C. An indenter is pressed into the surface of the polarizing plate-transparent conductive layer laminate at a constant speed and a load of 1 mN is applied for 15 seconds. The Martens hardness is calculated by dividing the load (1 mN), applied to the surface of the polarizing plate-transparent conductive layer laminate, by the surface area of the indenter penetrating beyond the zero point of the contact.

The optical laminate of the present disclosure is particularly suitable for technical fields where the transmittance of light can be changed in response to the application of voltage, and may be used, for example, for a smart window or the like.

The term "smart window" means an optical structure that controls the amount of light or heat passing therethrough by changing light transmittance in response to the application of an electrical signal. In other words, the smart window is configured to be changed into a transparent, opaque or translucent state by voltage and is also called variable transmittance glass, light control glass, or smart glass.

The smart window may be used as a partition for partitioning the internal space of a vehicle or a building or as a partition for privacy, and may be used as a skylight window arranged at an opening of a building. Furthermore, the smart window may be used as highway signs, notice boards, score boards, clocks or advertisement screens, and may be used to replace windows of vehicles, buses, airplanes, ships, or trains, or glass of means of transportation, such as a sunroof.

The optical laminate of the present disclosure may also be used for the smart window in the various technical fields mentioned above, but since the transparent conductive layer is formed directly on the polarizing plate, the optical laminate does not include a separate substrate for forming the transparent conductive layer, and thus has a small thickness and is favorable in terms of flexural properties. Thus, the optical laminate of may be particularly suitable for use for a smart window for a vehicle or a building. In one or more embodiments, a smart window having applied thereto the optical laminate of the present disclosure may be used as a front window, a rear window, a side window, and a sunroof window of an automobile, or a window for a building, and in addition to being used to block external light, may also be used for partitioning the internal space of an automobile or a building, or for protecting privacy, such as being used as an internal partition.

Hereinafter, embodiments of the present disclosure will be described in more detail with reference to the accompanying drawings. However, the following drawings attached to this specification illustrate preferred embodiments of the present disclosure, and serve to aid in further understanding of the technical idea of the present disclosure together with the contents of the present disclosure described above. Therefore, the present disclosure should not be interpreted as being limited to matters described in the drawings.

Terms used in the present specification are for purpose of describing embodiments and are not intended to limit the present disclosure. In the present specification, singular forms also include plural forms unless the context clearly indicates otherwise. For example, the term "polarizing plate" as used herein may mean at least one of a first polarizing plate and a second polarizing plate, and the term "transparent conductive layer" may mean at least one of a first transparent conductive layer and a second transparent conductive layer.

As used herein, terms such as "comprise", "comprising", "include", and "including" are intended to denote the existence of one or more stated components, steps, operations, and/or elements, but do not exclude the probability of existence or addition of one or more other components, steps, operations, and/or elements. Throughout the specification, like reference numerals refer to like components.

Spatially relative terms, such as "below", "lower surface", "beneath ", "above", "upper surface", "on" and the like, may be used to easily describe the relationship between one element or component(s) and other element or components(s) as illustrated in the figures. Spatially relative terms should be understood to encompass different orientations of the element in use or operation, in addition to the orientation depicted in the figures. For example, when elements illustrated in the figures are turned over, an element described as being "below" or "beneath" another element may be placed "above" the other element. Thus, the exemplary term "below" may include both the terms "above" and "below". The element may also be oriented in a different direction, and thus spatially relative terms may be interpreted according to the orientation.

As used herein, the term "outer portion" may mean the outermost portion of the optimal laminate, and may be a concept that is opposite to, for example, a liquid crystal layer positioned at the center of the optical laminate.

As used herein, the term "plane direction" may be interpreted as a direction orthogonal to the polarizing plate and/or the transparent conductive layer, that is, the direction of the user's view.

**<Optimal Laminate>**

The optical laminate of the present disclosure may include: a first laminate including a first polarizing plate 210 and a first transparent conductive layer 310; a second laminate opposite to the first laminate and including a second polarizing plate 220 and a second transparent conductive layer 320; and a liquid crystal layer 400 disposed between the first laminate and the second laminate.

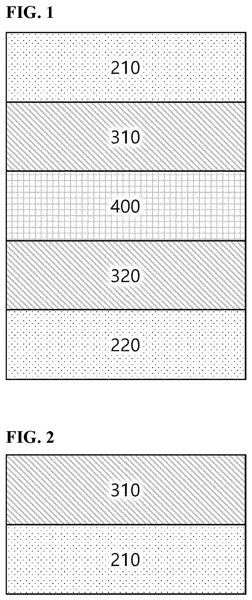

FIG. 1 shows the structure of an optical laminate according to one embodiment of the present disclosure. Referring to FIG. 1, the optical laminate according to one embodiment of the present disclosure may include a first polarizing plate 210, a second polarizing plate 220, a liquid crystal layer 400, a first transparent conductive layer 310, and a second transparent conductive layer 320.

The optical laminate of the present disclosure may be suitably applied to, for example, a smart window. In particular, in a case where a separate element such as an electrode should be included in a polarizing plate, as in a smart window, the compressive properties are not simply determined by the properties of each material included in the polarizing plate and the transparent conductive layer, but are changed by the components. Therefore, taking this into consideration, the compressive properties of the polarizing plate-transparent conductive layer laminate, particularly the hardness and elastic recovery rate, may be adjusted by adding a hard coating layer onto the polarizing plate, or using a material with a high molecular weight, or increasing or decreasing the thickness of the transparent conductive layer, or using a material with a structure having excellent hardness characteristics. If the hardness is excessively high, cracks and other defects may occur during the bonding process.

Specifically, according to the present disclosure, it is possible to manufacture an optical laminate having suitable Martens hardness and elastic recovery rate by controlling the thickness of a hard coating layer formed on a polarizing plate, determining whether an inorganic filler is added into the hard coating layer, and controlling the thickness of a transparent conductive layer. When the Martens hardness (HM) and elastic recovery rate (nIT) of each of the first laminate and the second laminate are adjusted within the ranges of 100 N/mm$^2$ to 430 N/mm$^2$ and 40% to 87%, respectively, by adjusting the components as described above, the polarizing plate-transparent conductive layer laminate is determined to have sufficient mechanical properties, and the phenomenon in which bubbles occur due to the shape deformation caused by compression in the process of combining the polarizing plate-transparent conductive layer laminate with the liquid crystal layer may not occur. Therefore, it is possible to manufacture an optical laminate in which the polarizing plate-transparent conductive layer laminate has excellent Martens hardness, and thus maintains its shape without being deformed, and has excellent elastic recovery rate, and thus may be recovered after being compressed, so that no appearance defects occur.

At this time, if at least one of the first laminate and the second laminate does not satisfy the above-described ranges, a problem may arise in that the polarizing plate-transparent conductive layer laminate shrinks significantly, making it difficult for the bonding layer to remain fixed thereto, which may cause wrinkles to form in the laminate, so that appearance defects such as bubbles and black spots occur or it is impossible for the laminate to drive as an optical laminate.

In smart windows, transparent appearance and visibility are very important factors. Unlike conventional display devices such as LCDs, smart windows do not include a support substrate between laminates, and due to the structural characteristics, polarizing plates have a very large impact on appearance. In addition, the smart window has a small thickness, but additional development may be required to improve mechanical properties or to achieve excellent appearance quality. Therefore, in order for an optical laminate to be used for a smart window, it is necessary to consider the hardness of the polarizing plate-transparent conductive layer laminate. From this perspective, Martens hardness is suitable for identifying defects and defect trends that appear in a composite layer because it comprehensively reflects the properties of the lower layer in the results.

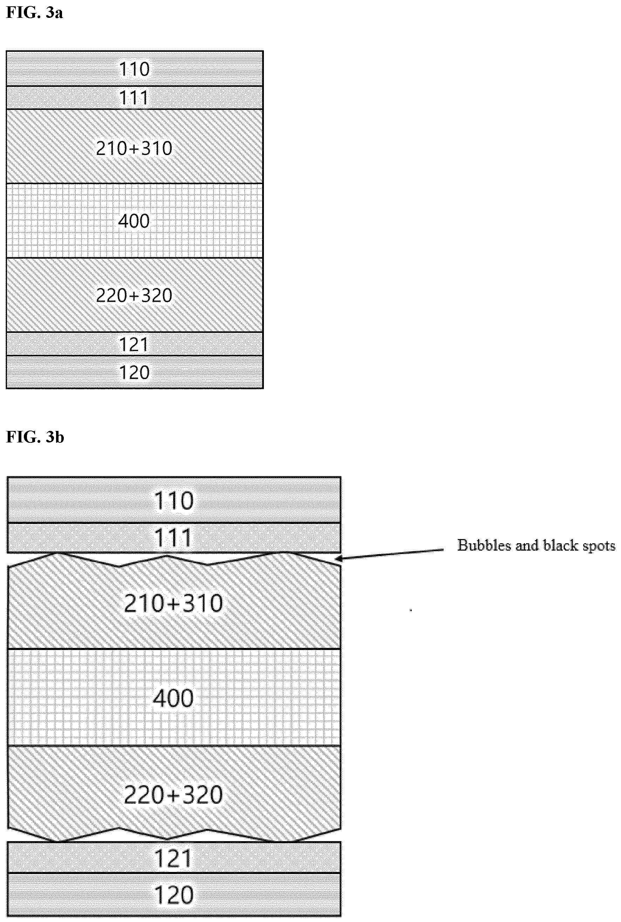

The bubbles and/or black spots may occur on the outer portions of the first and second laminates of the optical laminate, particularly on the surfaces where the first and second laminates come into contact with glass or the like. For example, referring to FIG. 3b showing an optical laminate in which defects have occurred, if a smart window including an optical laminate in which the phenomenon shown in FIG. 3b has occurred is manufactured, visible black spots are not those that occurred in a specific region such as the periphery or center, but are those that spread so severely throughout the first and second laminates that the actual use of the optical laminate is impossible.

The first laminate and the second laminate may or may not be identical to each other.

Polarizing Plate 210, 220

The first polarizing plate 210 and the second polarizing plate 220 may each independently be one of an iodine-based polarizing plate, a polyene-based polarizing plate, and a dye-based polarizing plate. In particular, the iodine-based polarizing plate has high transmittance, and thus is suitable for a smart window.

In one or more embodiments, the first polarizing plate and the second polarizing plate may each have a thickness of 30 to 300 $\mu$m, preferably 30 to 250 $\mu$m, more preferably 50 to 200 $\mu$m. If the thickness of each polarizing plate is less than 30 $\mu$m, the impact resistance may be reduced, and if the thickness is more than 300 $\mu$m, the bending resistance may be relatively reduced.

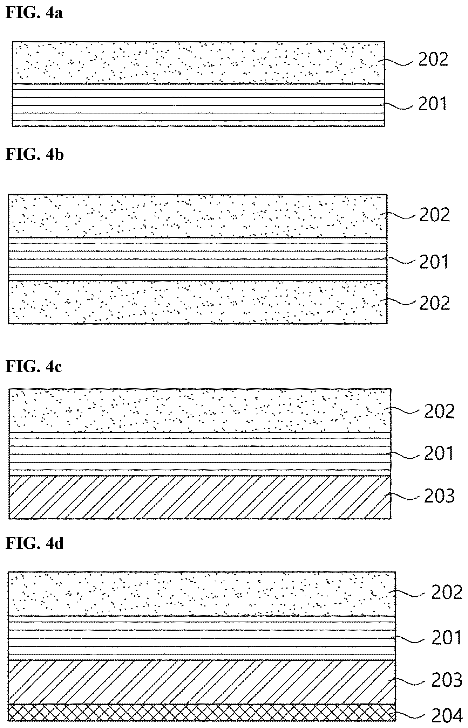

Referring to FIGS. 4a to 4e, the first polarizing plate 210 and the second polarizing plate 220 each include a polarizer 201, and may further include one or more functional layers, such as a protective layer 202, a retardation matching layer 203, or a refractive index-matching layer 204, on one or both surfaces of the polarizer. In this case, the configurations of the functional layers included in the first polarizing plate and the second polarizing plate may or may not be the same, and the Martens hardness and elastic recovery rate of the polarizing plate-transparent conductive layer laminate may be adjusted depending on the types and thicknesses of the layers constituting the polarizing plate, the thickness of the conductive layer, etc.

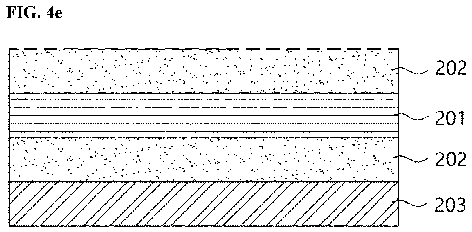

For example, the polarizing plate may include a polarizer 201 and a protective layer 202 laminated on one or both surfaces of the polarizer 201 (see FIGS. 4a and 4b), or may include a polarizer 201, a protective layer 202 laminated on one surface of the polarizer 210, and a retardation matching layer 203 laminated on the other surface opposite to the one surface of the polarizer 201 (see FIG. 4c), or may include a polarizer 201, a protective layer 202 laminated on one surface of the polarizer, and a retardation matching layer 203 and a refractive index-matching layer 204 sequentially laminated on the other surface opposite to the one surface of the polarizer 201 (see FIG. 4d), or may include a polarizer 201, a protective layer 202 laminated on one surface of the polarizer, and a protective layer 202 and a retardation matching layer 203 sequentially laminated on the other surface opposite to the one surface of the polarizer 201 (see FIG. 4e).

For example, the first polarizing plate and the second polarizing plate may include a first protective layer and a second protective layer on one surface and the other surface of a polarizer such as PVA, respectively. The first protective layer and the second protective layer serve to protect the polarizer, may be provided as one embodiment of the protective layer described above, and may include the material described below, specifically cellulose triacetate (TAC) or polyethylene terephthalate (PET). In addition, the first protective layer and the second protective layer may be bonded to the polarizer using a pressure-sensitive adhesive. The pressure-sensitive adhesive is not particularly limited as long as it has appropriate pressure-sensitive adhesive strength, transparency, thermal stability, etc. The method of bonding the first and/or second protective layers to the polarizer using the pressure-sensitive adhesive may be performed by a bonding method commonly used in the art. For example, a method may be used in which a pressure-sensitive adhesive composition is applied to the bonding surface of the polarizer or the a protective layer using a flexible coating method, a Meyer bar coating method, a gravure coating method, a die coating method, a dip coating method, a spray coating method, etc., and then the polarizer or the protective layer is inserted between nip rolls and bonded.

The polarizer 201 may be a conventional or later-developed polarizer, and may be, for example, a stretched polarizer or a coated polarizer.

In one embodiment, the stretched polarizer may include a stretched polyvinyl alcohol (PVA)-based resin. The polyvinyl alcohol (PVA)-based resin may be a polyvinyl alcohol-based resin obtained by saponifying a polyvinyl acetate-based resin. Examples of the polyvinyl acetate-based resin include polyvinyl acetate, which is a homopolymer of vinyl acetate, as well as copolymers of vinyl acetate and other monomers copolymerizable therewith. Examples of the other monomers include unsaturated carboxylic acid-based monomers, unsaturated sulfonic acid-based monomers, olefin-based monomers, vinyl ether-based monomers, acrylamide-based monomers having an ammonium group, and the like. In addition, the polyvinyl alcohol (PVA)-based resin may include a modified resin, for example, aldehyde-modified polyvinyl formal or polyvinyl acetal.

In one embodiment, the coated polarizer may be formed by a liquid crystal coating composition, wherein the liquid crystal coating composition may include a reactive liquid crystal compound, a dichroic dye, and the like.

The term "reactive liquid crystal compound" may refer to a compound including, for example, a mesogen skeleton and also including one or more polymerizable functional groups. Such reactive liquid crystal compounds are variously known under the name reactive mesogen (RM). The reactive liquid crystal compound may be polymerized by light or heat to form a cured film in which a polymer network is formed while maintaining the liquid crystal alignment.

The reactive liquid crystal compound may be a monofunctional or multifunctional reactive liquid crystal compound. The monofunctional reactive liquid crystal compound may refer to a compound having one polymerizable functional group, and the multifunctional reactive liquid crystal compound may refer to a compound having two or more polymerizable functional groups.

The dichroic dye is a component included in the liquid crystal coating composition to impart polarization properties, and has different absorbances in the major and minor axis directions of the molecule. The dichroic dyes may be a conventional or later-developed dichroic dye, and may include at least one selected from the group consisting of azo dyes, anthraquinone dyes, perylene dyes, merocyanine dyes, azomethine dyes, phthaloperylene dyes, indigo dyes, dioxazine dyes, polythiophene dyes, and phenoxazine dyes.

The liquid crystal coating composition may further include a solvent capable of dissolving the reactive liquid crystal compound and the dichroic dye, and examples of the solvent include propylene glycol monomethyl ether acetate (PGMEA), methyl ethyl ketone (MEK), xylene, and chloroform. In addition, the liquid crystal coating composition may further include a leveling agent, a polymerization initiator, and the like, within a range that does not impair the polarization characteristics of the coating film.

The protective layer 202 serves to protect the polarization characteristics of the polarizer 210 from post-processing and external environments, and may be provided in the form of a protective film, etc.

The protective layer 202 may be formed on and in direct contact with one or both surfaces of the polarizer 201, as shown in FIGS. 4a and 4b, without being limited thereto. For example, the protective layer may have a multi-layer structure in which one or more protective layers are continuously laminated, and may be formed in direct contact with other functional layer(s).

In one or more embodiments, the protective layer 202 may include at least one selected from the group consisting of polyethylene terephthalate (PET), polyethylene isophthalate (PEI), polyethylene naphthalate (PEN), polybutylene terephthalate (PBT), diacetyl cellulose, triacetyl cellulose (TAC), polycarbonate (PC), polyethylene (PE), polypropylene(PP), polymethyl acrylate (PMA), polymethyl methacrylate (PMMA), polyethyl acrylate (PEA), polyethyl methacrylate (PEMA), and cyclic olefin polymer (COP).

The retardation matching layer 203 serves to compensate for the optical characteristics of the optical laminate, and may be provided in the form of a retardation film, etc., and a conventional or later-developed retardation film or may be used. For example, a zero retardation plate having an in-plane retardation substantially close to 0 may be used to suppress phase retardation, or quarter-wave plates or half-wave plates may be used to retard the phase of light, and these may be used alone or in combination.

The retardation matching layer 203 may be formed on and in direct contact with one surface of the polarizer 201, as shown in FIGS. 4c and 4d, without being limited thereto. For example, as shown in FIG. 4e, the retardation matching layer 203 may be formed on one surface of the protective layer 220, so that the polarizer 201, the protective layer 202, and the retardation matching layer 203 may be sequentially laminated.

The retardation matching layer 203 may include either a stretched polymer film obtained by stretching a polymer film capable of imparting optical anisotropy in an appropriate manner, or a liquid crystal polymer film.

In one embodiment, the stretched polymer film may include a polymer layer including a polyolefin such as polyethylene (PE) or polypropylene (PP), a cyclic olefin polymer (COP) such as polynorbornene, a polyester such as polyvinyl chloride (PVC), polyacrylonitrile (PAN), polysulfone (PSU), acrylic resin, polycarbonate (PC), or polyethylene terephthalate(PET), a cellulose acetate-based polymer such as polyacrylate, polyvinyl alcohol (PVA) or triacetyl cellulose (TAC), or a copolymer of two or more monomers among the monomers forming the polymers.

The method of obtaining the stretched polymer film is not particularly limited, and for example, the stretched polymer film may be obtained by forming the polymer material into a film form, followed by stretching. The method for forming the polymer material into a film form is not particularly limited, and the polymer material may be formed into a film by a known method such as injection molding, sheet molding, blow molding, injection blow molding, inflation molding, extrusion molding, foam molding, cast molding, or the like. In addition, a secondary processing molding method such as pressure molding or vacuum molding may also be used. Thereamong, extrusion molding or cast molding is preferably used. In this case, for example, an unstretched film may be extrusion-molded using an extruder equipped with a T-die, a circular die, or the like. When a molded product is obtained by extrusion molding, a material prepared by melt-kneading various resin components, additives, etc. may be used and the molded product may be formed by melt-kneading during extrusion molding. Furthermore, after various resin components are dissolved using a common solvent, for example, a solvent such as chloroform or methylene chloride, an unstretched film may be cast-molded by cast drying and solidification.

The stretched polymer film may be provided by performing uniaxial stretching on the formed film in a mechanical direction (MD, longitudinal or lengthwise direction), and by performing uniaxial stretching in a transverse direction (TD, or widthwise direction) perpendicular to the MD. Alternatively, a biaxially stretched film may be manufactured by performing stretching by a sequential biaxial stretching method of roll stretching and tenter stretching, a simultaneous biaxial stretching method of tenter stretching, a biaxial stretching method of tubular stretching, or the like.

The liquid crystal polymer film may include a reactive liquid crystal compound in a polymerized state. The above description of the reactive liquid crystal compound of the coated polarizer may be equally applied to the reactive liquid crystal compound.

In one or more embodiments, the thickness of the retardation matching layer 203 may be 10 $\mu$m to 100 $\mu$m in the case of the stretched polymer film, and 0.1 $\mu$m to 5 $\mu$m in the case of the liquid crystal polymer film.

The refractive index-matching layer 204 is provided to compensate for the refractive index difference of the optical laminate caused by the transparent conductive layer, and may serve to improve the viewing characteristics, etc. by reducing the refractive index difference. Furthermore, the refractive index-matching layer 204 may be provided to correct the color caused by the transparent conductive layer. Meanwhile, when the transparent conductive layer has a pattern, the refractive index-matching layer 204 may compensate for the difference in transmittance between a pattern region with the pattern formed and a non-pattern region where no pattern is formed.

Specifically, the transparent conductive layer is laminated adjacent to other members having a refractive index different therefrom (for example, the polarizer 201, etc.), and the difference in the refractive index between the transparent conductive layer and other layer adjacent thereto may lead to the difference in light transmittance. In particular, if a pattern is formed on the transparent conductive layer, a problem may arise in that the pattern region and the non-pattern region are viewed to be distinguishable from each other. Therefore, the refractive index-matching layer 204 is included to compensate for refractive index, thereby reducing the difference in light transmittance of the optical laminate. In particular, when a pattern is formed on the transparent conductive layer, the refractive index-matching layer prevents the pattern region and the non-pattern region from being viewed to be distinguishable from each other.

In one embodiment, the polarizing plate may further include other functional layers to assist or enhance the characteristics of the polarizer, in addition to the above-mentioned functional layers and, for example, may further include an overcoat layer in order to further improve the mechanical durability.

The first polarizing plate and the second polarizing plate of the present disclosure may each independently further include a hard coating layer (not shown). For example, the hard coating layer may be formed on one surface of the polarizing plate, and more preferably, may be positioned between the polarizing plate and the transparent conductive layer. The hard coating layer may be formed by applying a composition for forming a hard coating layer onto another member and then curing the same with light or heat. In this case, the composition for forming a hard coating layer is not particularly limited and may include, for example, a photocurable compound and a photoinitiator.

As the photocurable compound and the photoinitiator, those commonly used in the art may be used without limitation. For example, the photocurable compound may be a photopolymerizable monomer, a photopolymerizable oligomer, or the like, and examples thereof include monofunctional and/or polyfunctional (meth)acrylates. Examples of the photoinitiator include hydroxycyclohexyl phenyl ketone, trimethylbenzoyl diphenylphosphine oxide, acetophenone, oxime ester, etc., and commercially available photoinitiator products include Irgacure-184, TPO, Irgacure-907, etc.

In addition, the hard coating layer in the present disclosure may include an inorganic filler. Specifically, when the hard coating layer composition includes an inorganic filler, better hardness may be obtained, and the physical properties of the polarizing plate-transparent conductive layer laminate may also be improved by adjusting the thickness of the hard coating layer, which is preferable. In this case, it is particularly preferable to use silica particles having an average particle size of 20 nm or less as the inorganic filler. The silica particles used in the manufacturing process are not limited, but are preferably in the form of water-dispersed or organic solvent-dispersed colloidal silica sol. By including the inorganic filler satisfying the above conditions, the polarizing plate having the hard coating layer may have sufficient hardness and be prevented from curling. If the average particle size of the silica particles is more than 20 nm, the transparency of the optical laminate is reduced or the surface condition thereof becomes poor.

Specific examples of commercially available dispersed silica sols include the PURISOL-O series (manufactured by Gaematech Co., Ltd.), CATALOID-S series (made by Catalyst Chemical Industries Co., Ltd.), and YGS-series (made by Youngil Chemical Co., Ltd.).

The hard coating layer may be formed to have a thickness of 3 to 25 μm. When the hard coating layer is formed on the polarizing plate to have a thickness within the above range, there is an advantage in that the thickness is sufficient to provide an appropriate Martens hardness and elastic recovery rate to the polarizing plate-conductive layer laminate including the polarizing plate, thereby ensuring mechanical properties while maintaining the optical laminate at a smaller thickness. If the thickness of the hard coating layer is less than 3 μm, there are cases where sufficient Martens hardness is not achieved due to insufficient hardness, and if the thickness is more than 25 μm, the amount of resin used to form the hard coating layer increases, which not only leads to an increase in manufacturing costs, but also makes it easy for damage such as wrinkles to occur, and the elastic recovery rate decreases. In particular, when at least one of the first laminate or the second laminate includes a hard coating layer having a thickness larger than the upper limit of the above range, the optical laminate including the first laminate and the second laminate may have black spots or curls on one surface including the hard coating layer, or driving thereof may be poor.

The optical laminate of the present disclosure may further include other members within a range that does not impair the purpose of the present disclosure, and for example, it may further include at least one of a pressure-sensitive adhesive layer and a UV-absorbing layer.

The UV-absorbing layer is not particularly limited as long as it prevents UV-induced deterioration of the optical laminate. Examples of the UV absorber forming the UV-absorbing layer include salicylic acid-based UV absorbers (phenyl salicylate, p-tert-butyl salicylate, etc.), benzophenone-based UV absorbers (2,4-dihydroxybenzophenone, 2,2'-dihydroxy-4,4'-dimethoxybenzophenone, etc.), benzotriazole-based UV absorbers (2-(2'-hydroxy-5'-methylphenyl)benzotriazole, 2-(2'-hydroxy-3',5'-di-tert-butylphenyl)benzotriazole, 2-(2'-hydroxy-3'-tert-butyl-5'-methylphenyl)benzotriazole, 2-(2'-hydroxy-3',5'-di-tert-butylphenyl)-5-chlorobenzotriazole, 2-(2'-hydroxy-3'-(3",4",5",6"-tetrahydrophthalimidemethyl)-5'-methylphenyl)benzotriazole, 2,2-methylenebis(4-(1,1,3,3-tetramethylbutyl)-6-(2H-benzotriazol-2-yl)phenol), 2-(2'-hydroxy-3'-tert-butyl-5'-methylphenyl)-5-chlorobenzotriazole, 2-(2'-hydroxy-3'-tert-butyl-5'-(2-octyloxycarbonylethyl)-phenyl)-5-chlorobenzotriazole, 2-(2'-hydroxy-3'-(1-methyl-1-phenylethyl)-5'-(1,1,3,3-tetramethylbutyl)-phenyl) benzotriazole, 2-(2H-benzotriazol-2-yl)-6-(linear and branched-chain dodecyl)-4-methylphenol, a mixture of octyl-3-[3-tert-butyl-4-hydroxy-5-(chloro-2H-benzotriazol-2-yl)phenyl]propionate and 2-ethylhexyl-3-[3-tert-butyl-4-hydroxy-5-(5-chloro-2H-benzotriazol-2-yl)phenyl]propionate, etc.), cyanoacrylate-based ultraviolet absorbers (2'-ethylhexyl-2-cyano-3,3-diphenyl acrylate, ethyl-2-cyano-3-(3',4'-methylenedioxyphenyl)-acrylate, etc.), triazine-based UV absorbers, and the like. Thereamong, a benzotriazole-based UV absorber or a triazine-based UV absorber, which has high transparency and an excellent effect of preventing deterioration of the polarizing plate or the layer, is preferable, and a benzotriazole-based UV absorber having a more appropriate spectral absorption spectrum is particularly preferable. The benzotriazole-based UV absorber may be a bis(benzotriazole) compound, for example, 6,6'-methylenebis(2-(2H-benzo[d][1,2,3]triazol-2-yl)-4-(2,4,4-trimethylpentan-2-yl)phenol), 6,6'-methylenebis(2-(2H-benzo[d][1,2,3]triazol-2-yl)-4-(2-hydroxyethyl)phenol), or the like.

Transparent Conductive Layer 310, 320

The transparent conductive layer 310, 320 is provided for driving the liquid crystal layer 400, and at least one of the first transparent conductive layer and the second transparent conductive layer may be formed in direct contact with the first polarizing plate or the second polarizing plate without including a separate substrate therebetween. In this case, it is possible to manufacture an optical laminate having a small thickness while maintaining the optical characteristics of the first polarizing plate and the second polarizing plate.

For example, as shown in FIG. 1, the first transparent conductive layer 310 may be formed in direct contact with the first polarizing plate 210, and the second transparent conductive layer 320 may be formed in direct contact with the second polarizing plate 220.

Conventionally, an optical laminate used to manufacture a smart window, etc. is manufactured by forming a conductive layer for driving liquid crystals on one surface of a substrate and bonding the other surface of the substrate to a polarizing plate. However, the optical laminate according to the present disclosure has the conductive layer directly formed on one surface of the polarizing plate without including a separate substrate for forming the conductive layer, and thus may have improved transmittance in a light transmission mode and improved flexural properties while having a reduced thickness.

In one embodiment, the first transparent conductive layer 310 and/or the second transparent conductive layer 320 formed in direct contact with at least one of the first polarizing plate 210 and the second polarizing plate 220 shares a contact surface with the first polarizing plate 210 and/or the second polarizing plate 220, meaning that at least one of the transparent conductive layers is formed on the polarizing plate without including a separate substrate. For example, the first transparent conductive layer 310 and/or the second transparent conductive layer 320 may be deposited and formed on the upper surface of a coating layer formed on the first polarizing plate 210 and/or the second polarizing plate 220. In this case, the first transparent conductive layer 310 and/or the second transparent conductive layer 320 may be formed in direct contact with a pretreated surface of the polarizing plate after performing pre-treatment such as corona treatment or plasma treatment on one surface of the polarizing plate in order to improve the adhesion thereof to at least one of the first polarizing plate 210 and the second polarizing plate 220. The pre-treatment is not limited to corona treatment or plasma treatment, and may be performed using any conventional or later-developed pre-treatment process within a range that does not impair the purpose of the present disclosure.

In another embodiment of the present disclosure, the first transparent conductive layer 310 and/or the second transparent conductive layer 320, which are/is formed in direct contact with at least one of the first polarizing plate 210 and the second polarizing plate 220, may be formed on the polarizing plate with a highly adhesive layer (not shown; formed on one surface of the polarizing plate) interposed therebetween in order to improve the adhesion between the transparent conductive layer and the polarizing plate. The highly adhesive layer may be formed using a conventional or later-developed pressure-sensitive adhesive. In one or more embodiments, the pressure-sensitive adhesive may be an acrylic pressure-sensitive adhesive, a rubber-based pressure-sensitive adhesive, a silicone-based pressure-sensitive adhesive, a urethane-based pressure-sensitive adhesive, a polyvinyl alcohol-based pressure-sensitive adhesive, a polyvinyl pyrrolidone-based pressure-sensitive adhesive, a polyacrylamide-based pressure-sensitive adhesive, a cellulose-based pressure-sensitive adhesive, a vinyl alkyl ether-based pressure-sensitive adhesive, or the like. The pressure-sensitive adhesive is not particularly limited as long as it has adhesive and viscoelastic properties. However, the pressure-sensitive adhesive may preferably be an acrylic pressure-sensitive adhesive from the viewpoint of easy availability, etc., and may include, for example, a (meth)acrylate copolymer, a crosslinking agent, and a solvent, etc.

The transparent conductive layer may be formed on one surface of the polarizing plate by a deposition and coating method commonly used in art. For example, it may be formed by an appropriate process selected from coating processes such as spin coating, roller coating, bar coating, dip coating, gravure coating, curtain coating, die coating, spray coating, doctor coating, and kneader coating processes; printing (application) processes such as screen printing, spray printing, inkjet printing, relief printing, intaglio printing, and flat printing processes; and deposition processes such as a chemical vapor deposition (CVD), physical vapor deposition (PVD), plasma-enhanced chemical vapor deposition (PECVD), etc.

In the optical laminate of the present disclosure, at least one of the first transparent conductive layer 310 and the second transparent conductive layer 320 may include at least one selected from the group consisting of a transparent conductive oxide, a metal, a carbonaceous material, a conductive polymer, a conductive ink, and nanowires, without being not limited thereto, and a conventional or later-developed transparent conductive layer material may be used.

In one or more embodiments, the transparent conductive oxide may include at least one selected from a group consisting of indium tin oxide (ITO), indium zinc oxide (IZO), indium zinc tin oxide (IZTO), aluminum zinc oxide (AZO), gallium zinc oxide (GZO), fluorine tin oxide (FTO), zinc oxide (ZnO), and the like.

Furthermore, the metal may include at least one selected from a group consisting of gold (Au), silver (Ag), copper (Cu), aluminum (Al), platinum (Pt), palladium (Pd), chromium (Cr), titanium (Ti), tungsten (W), niobium (Nb), tantalum (Ta), vanadium (V), iron (Fe), manganese (Mn), cobalt (Co), nickel (Ni), zinc (Zn), and alloys containing at least one of these metals, and may include, for example, a silver-palladium-copper (APC) alloy or a copper-calcium (CuCa) alloy.

The carbonaceous material may include at least one selected from the group consisting of carbon nanotubes (CNTs), graphene, and the like.

The conductive polymer may be a conventional or later-developed conductive polymer material. For example, the conductive polymer may include at least one selected from the group consisting of polythiophene, poly(3,4-ethylenedioxythiophene), polyaniline, polyacetylene, polydiacetylene, polyphenylene, polyphenylene vinylene, polyphenylene sulfide, polythienylene vinylene, polythiophene vinylene, polyfluorene, polypyrrole, poly(3,4-ethylenedioxythiophene): polystyrene sulfonate, poly(3,4-ethylenedioxythiophene): camphor sulfonic acid, poly(3,4-ethylenedioxythiophene): toluene sulfonic acid, poly(3,4-ethylenedioxythiophene): dodecylbenzene sulfonic acid, polyaniline: polystyrene sulfonate, polyaniline: camphorsulfonic acid, polypyrrole: polystyrene sulfonate, polypyrrole: camphorsulfonic acid, polypyrrole: toluenesulfonic acid, polypyrrole: dodecylbenzene sulfonic acid, polythiophene: polystyrene sulfonate, polythiophene: camphorsulfonic acid, polythiophene: toluenesulfonic acid, and polythiophene: dodecylbenzene sulfonic acid polymers. Conductive polymers do not require relatively high temperatures during the deposition process, making it possible to prevent deformation from occurring in the polarizing plate during the process. Thus, is particularly preferable to use a conductive polymer that may be molded at lower temperatures.

The conductive ink may be an ink composed of a mixture of metal powder and a curable polymeric binder, and the nanowires may be, for example, silver nanowires (AgNWs).

Furthermore, the first transparent conductive layer 310 and the second transparent conductive layer 320 may each be formed to have a structure consisting of two or more layers by combining the above-described materials. For example, in order to reduce the reflectivity of incident light and increase the transmittance, the first transparent conductive layer and the second transparent conductive layer may each be formed to have a two-layer structure including a metal layer and a transparent conductive oxide layer.

In one embodiment, the transparent conductive layer may have a thickness of 5 $\mu$m or less, preferably 3 $\mu$m or

less. In this case, the transparent conductive layer has a strong compressive property while ensuring a predetermined transmittance, and it is possible to manufacture an optical laminate having a small thickness. In addition, as the thickness becomes smaller, the Martens hardness and elastic recovery rate may be improved.

Liquid Crystal Layer

The liquid crystal layer 400 can change the driving mode of the optical laminate to a light transmission mode or a light-blocking mode by controlling the transmittance of light incident from one or more directions in response to an electric field generated by the transparent conductive layer.

The liquid crystal compound is not particularly limited as long as it is driven in response to an electric field and is capable of controlling the light transmittance, and a conventional or later-developed liquid crystal compound may be used. For example, the contents regarding the reactive liquid crystal compound of the above-described coated polarizer may be equally applied to the liquid crystal compound.

The liquid crystal driving mode of the liquid crystal layer 400 is not particularly limited, and examples thereof include a twisted nematic (TN) mode a super-twisted nematic (STN) mode, an in-plane switching (IPS) mode, a fringe-field switching (FFS) mode, an electrically controlled birefringence (ECB) mode, and a vertical alignment (VA) mode. In terms of controlling the light transmittance, the TN mode may preferably be used.

In addition, according to another embodiment of the present disclosure, the liquid crystal layer 400 may further include a sealant layer formed in an outer peripheral portion thereof. The sealant layer serves to bond two different polarizing plate-transparent conductive layer laminates to each other and may be positioned in an inactive region.

The optical laminate of the present disclosure may further include other members within a range that does not impair the purpose of the present disclosure. For example, it may further include glass, a UV-absorbing layer, and a pressure-sensitive adhesive layer.

Referring to FIG. 3a, which is an example of the present disclosure to which the optical laminate has been applied, the optical laminate shown in FIG. 1 may further include a first glass 110 on an outer portion of the first laminate, and may further include a second glass 120 on an outer portion of the second laminate. The first glass and/or the second glass may include a glass material having durability against external impact and transparency that is visible by a user or having flexible characteristics. For example, the first glass and the second glass may each include at least one of glass, ceramic glass, quartz glass, borosilicate, aluminosilicate, non-alkali glass, soda lime glass, meshed glass, colored glass, magic mirror, holographic glass, and oxide glass such as silicate glass, borate glass, and phosphate glass.

In this case, the optical laminate may further include a first bonding layer between the first laminate and the first glass, and/or may further include a second bonding layer between the second laminate and the second glass. Specifically, when the optical laminate of the present disclosure is applied to a smart window, the polarizing plate should be bonded to glass without wrinkles or warping as shown in FIG. 3a so that bubbles and black spots as shown in FIG. 3b do not occur. Therefore, in order to prevent appearance defects that may occur during the process, an appropriate bonding layer is required that may not only limit the thermal stress of the polarizing plate but also adhere the polarizing plate to the glass.

The bonding layer may be formed from a pressure-sensitive adhesive composition containing an acrylic random copolymer and a tackifier, and any resin having thermal stability and chemical stability after curing, such as a UV-curable resin or a thermosetting resin, may be used as the bonding layer. For example, when the resin is included in the form of a sealant, examples thereof include components commonly used in the art, such as acrylate-based, epoxy-based, urethane-based and phenol-based resins, and later-developed resins. In particular, poly(vinyl butyral) (PVB) or ethylene vinyl acetate (EVA) may preferably be used. When PVB or EVA is used, the bonding of the bonding layer is stable under high temperature and high pressure conditions, which is preferable.

The acrylic random copolymer may include monomers commonly used in the art to which the present disclosure belongs, within a range that does not reduce elasticity and adhesiveness.

The method for producing the above acrylic random copolymer is not particularly limited. For example, methods such as bulk polymerization, solution polymerization, emulsion polymerization, suspension polymerization, UV polymerization, etc., which are commonly used in the art to which the present disclosure belongs, may be used, and preferably, solution polymerization or UV polymerization may be used.

The tackifier may be included together with the acrylic random copolymer to improve the adhesiveness and tackiness of the bonding layer formed from the adhesive composition.

The composition for forming the bonding layer may further include additives to enhance coating properties, adhesion, etc., according to the needs of those skilled in the art, within a range that does not impair the purpose of the present disclosure. To this end, the composition may further include components commonly used in the art, such as surfactants, silane coupling agents, antioxidants, UV absorbers, and/or anti-coagulants. These components may be used alone, or two or more thereof may be used in any combination at any ratio.

The thickness of the bonding layer may be 5 to 80 $\mu$m. When the thickness of the bonding layer is within the above range, the bonding layer may have excellent adhesion and fixing strength, thereby preventing shrinkage of the polarizing plate.

**< Smart Window, Automobile, and Window for Building>**

The present disclosure includes, in addition to the optical laminate, a smart window including the same. In particular, the optical laminate of the present disclosure has an excellent advantage in that it is possible to manufacture an optical laminate, particularly an optical laminate suitable for a smart window, which has no bubbles and black spots and is driven smoothly, by limiting the Martens hardness and elastic recovery rate of a polarizing plate-transparent conductive layer laminate positioned above or below a liquid crystal layer.

Hereinafter, examples of the present disclosure will be described in detail. However, the present disclosure may be embodied in various different forms and should not be construed as being limited to the examples disclosed below. Rather, these examples are provided so that this disclosure will be thorough and complete and will fully convey the scope of the present disclosure to those skilled in the art, and the present disclosure will only be defined by the scope of the appended claims

**Preparation Example 1: Production of Polarizing Plate**

(1) Swelling Treatment Process

A 60-$\mu$m-thick polyvinyl alcohol film (raw film) (manufactured by Kuraray Co., Ltd., trade name: Kuraray Poval Film VF-PE#6000, average degree of polymerization: 2,400, degree of saponification: 99.9 mol%) was continuously unwound from a raw film roll, conveyed, and dipped in a swelling bath containing pure water at 20°C for 30 seconds. In this swelling treatment process, roll-to-roll stretching (longitudinal uniaxial stretching) was performed by creating a difference in peripheral speed between the nip rolls. The stretching ratio with respect to the raw film was set to 2.5 times.

2) Dyeing Treatment Process

Next, the film that passed through the nip rolls was dipped in a dyeing bath for 120 seconds. In this dyeing treatment process, roll-to-roll stretching (longitudinal uniaxial stretching) was performed by creating a difference in peripheral speed between the nip rolls. The stretching ratio with respect to the film after the swelling treatment process was set to 1.1 times.

(3) Crosslinking Treatment Process

Next, the film that passed through the nip rolls was dipped in a first crosslinking bath at 56°C for 70 seconds. Roll-to-roll stretching (longitudinal uniaxial stretching) was performed by creating a difference in peripheral speed between the nip rolls and the nip rolls provided between the first crosslinking bath and the second crosslinking bath. The stretching ratio with respect to the film after the dyeing treatment process was set to 1.9 times.

(4) Color Complementing Process

Next, the film after the crosslinking treatment was dipped in a second crosslinking bath at 40°C 10 seconds.

(5) Cleaning Treatment Process

Next, the film after the second crosslinking treatment was dipped in a cleaning bath containing pure water at 14°C for 5 seconds, and cleaned with a shower volume of 5 m$^3$/h at a shower temperature of 14°C.

(6) Drying Treatment Process

Next, the film after the cleaning treatment process was heat-dried at 80°C for 190 seconds by passage through a drying oven, thereby producing a polarizer film. The moisture content after drying was 13.6%, and the thickness of the obtained polarizer film was about 21 $\mu$m.

(7) Bonding Treatment Process

Next, as an adhesive, an aqueous adhesive containing 5 parts by mass of polyvinyl alcohol per 100 parts by mass of water was prepared. Thereafter, a triacetyl cellulose (TAC) film (thickness 40 $\mu$m) was laminated on both surfaces of the polarizer film using the prepared UV-curable adhesive to form first and second protective films. The obtained laminate was exposed to UV light, and the adhesive was cured, thereby producing a polarizing plate. The thickness of the adhesive layer in the produced polarizing plate was about 2 $\mu$m. The thicknesses and types of protective films of the polarizing plate are shown in Table 1 below.

**Preparation Example 2-1: Preparation of Hard Coating Composition Containing Inorganic Filler**

15 parts by weight of pentaerythritol triacrylate as a photocurable resin, 30 parts by weight of propylene glycol monomethyl ether-dispersed reactive silica sol (average particle size: 15 nm, solid content: 40%), 2.7 parts by weight of 1-hydroxy-cyclohexyl-phenyl-ketone as a photoinitiator, 52 parts by weight of propylene glycol monomethyl ether as a solvent, and 0.3 parts by weight of BYK-UV3570 (BYK) as a leveling agent were placed and mixed in a stirrer, and the mixture was filtered using a PP material filter, thereby preparing a hard coating composition.

**Preparation Example 2-2: Preparation of Inorganic Filler-Free Hard Coating Composition**

35 parts by weight of hexafunctional acrylate (PU620D, Miwon Specialty Chemical Co., Ltd.) as a photocurable resin, 10 parts by weight of hexanediol diacrylate, 2.7 parts by weight of 1-hydroxy-cyclohexyl-phenyl-ketone as a photoinitiator, 52 parts by weight of propylene glycol monomethyl ether as a solvent, and 0.3 parts by weight of BYK-UV3570 (BYK) as a leveling agent were placed and mixed in a stirrer, and the mixture was filtered using a PP material filter, thereby preparing a hard coating composition.

**Preparation Example 3: Formation of Transparent Conductive Layer (PEDOT)**

A transparent conductive layer was formed from a 1:1 mixture of conductive polymer solutions 1 and 2. Solution 1 was a mixture containing, based on the total weight of solution 1, 60 wt% of ethenyl benzenesulfonic acid homopolymer compound with 2,3-dihydrothieno[3,4-b]-1,4-dioxin homopolymer (water based), 20 wt% of ethyl alcohol, and 20 wt% of deionized water, and solution 2 was a mixture containing, based on the total weight of solution 2, 1.0 wt% of polyester resin (water based; solid content: 25%), 75 wt% of ethyl alcohol, and 24 wt% of deionized water.

**Examples and Comparative Examples: Manufacturing of Polarizing Plate-Transparent Conductive Layer Laminates**

The first polarizing plate produced according to Preparation Example 1 was coated with the hard coating composition prepared according to Preparation Example 2, and the coated composition was dried to remove the solvent and cured by UV irradiation under a nitrogen atmosphere to form a hard coating layer, and a first laminate including the first transparent conductive layer formed according to Preparation Example 3 was manufactured. A second laminate was manufactured in the same manner as the first laminate. The configurations of the Examples and the Comparative Examples are as shown in Table 1 below.

[Table 1]

|  |  | First laminate | Second laminate |
|---|---|---|---|
|  | Example 1 | TAC (40$\mu$m)/PVA (21$\mu$m)/TAC (40$\mu$m)/inorganic filler-containing HC (25$\mu$m)/ PEDOT (0.2$\mu$m) | TAC (40$\mu$m)/PVA (21$\mu$m)/TAC (40$\mu$m)/ inorganic filler-containing HC (25$\mu$m)/ PEDOT (0.2$\mu$m) |
|  | Example 2 | TAC (40$\mu$m)/PVA (21$\mu$m)/TAC (40$\mu$m)/inorganic filler-containing HC (10 $\mu$m)/PEDOT (2$\mu$m) | TAC (40$\mu$m)/PVA (21$\mu$m)/TAC (40$\mu$m)/ inorganic filler-containing HC (10$\mu$m) PEDOT (2$\mu$m) |
|  | Example 3 | TAC (40$\mu$m)/PVA (21$\mu$m)/TAC (40$\mu$m)/ inorganic filler-containing HC (25$\mu$m)/ PEDOT (2$\mu$m) | TAC (40$\mu$m)/PVA (21$\mu$m)/TAC (40$\mu$m)/ inorganic filler-containing HC (10$\mu$m)/ PEDOT (2$\mu$m) |
|  | Example 4 | TAC (40$\mu$m)/PVA (21$\mu$m)/TAC (40$\mu$m)/ inorganic filler-containing HC (20$\mu$m)/ PEDOT (2$\mu$m) | TAC (40$\mu$m)/PVA (21$\mu$m)/TAC (40$\mu$m)/ inorganic filler-containing HC (15$\mu$m)/ PEDOT (2$\mu$m) |

(continued)

|  | First laminate | Second laminate |
|---|---|---|
| Example 5 | TAC (40μm)/PVA (21μm)/TAC (40μm)/ inorganic filler-containing HC (15μm)/ PEDOT (2μm) | TAC (40μm)/PVA (21μm)/TAC (40μm)/ inorganic filler-containing HC (15μm)/ PEDOT (2μm) |
| Example 6 | TAC (40μm)/PVA (21μm)/TAC (40μm)/ inorganic filler-containing HC (10μm)/ PEDOT (2μm) | TAC(40μm)/PVA(21μm)/TAC(40μm)/ inorganic filler-containing HC (25μm)/ PEDOT (2μm) |
| Comparative Example 1 | TAC (40μm)/PVA (21μm)/TAC (40μm)/ inorganic filler-free HC (10μm)/ PEDOT (2μm) | TAC (40μm)/PVA (21μm)/TAC (40μm)/inorganic filler-free HC (10μm)/ PEDOT (2μm) |
| Comparative Example 2 | TAC (40μm)/PVA (21μm)/TAC (40μm)/ inorganic filler-free HC (10μm)/ PEDOT (2μm) | TAC (40μm)/PVA (21μm)/TAC (40μm)/ inorganic filler-containing HC (25μm)/ PEDOT (0.2μm) |
| Comparative Example 3 | TAC (40μm)/PVA (21μm)/TAC (40μm)/ inorganic filler-free HC (5μm)/PEDOT (2μm) | TAC (40μm)/PVA (21μm)/TAC (40μm)/ inorganic filler-containing HC(25μm)/ PEDOT (0.2μm) |
| Comparative Example 4 | TAC (40μm)/PVA (21μm)/TAC (40μm)/ inorganic filler-containing HC (25μm)/ PEDOT (0.2μm) | TAC (40μm)/PVA (21μm)/TAC (40μm)/ inorganic filler-free HC (10μm)/ PEDOT (2μm) |
| Comparative Example 5 | TAC (40μm)/PVA (21μm)/TAC (40μm)/ inorganic filler-containing HC (25μm)/ PEDOT (0.2μm) | TAC (40μm)/PVA (21μm)/TAC (40μm)/ inorganic filler-free HC (5μm)/PEDOT (2μm) |
| Comparative Example 6 | TAC (40μm)/PVA (21μm)/TAC (40μm)/ inorganic filler-containing HC(40μm)/ PEDOT (0.2μm) | TAC (40μm)/PVA (21μm)/TAC (40μm)/ inorganic filler-containing HC (20μm)/ PEDOT (2μm) |
| Comparative Example 7 | TAC (40μm)/PVA (21μm)/TAC (40μm)/ inorganic filler-containing HC (30μm)/ PEDOT (0.2μm) | TAC (40μm)/PVA (21μm)/TAC (40μm)/ inorganic filler-containing HC (20μm)/ PEDOT (2μm) |
| Comparative Example 8 | TAC (40μm)/PVA (21μm)/TAC (40μm)/ inorganic filler-containing HC (20μm)/ PEDOT (2μm) | TAC (40μm)/PVA (21μm)/TAC (40μm)/ inorganic filler-containing HC (40μm)/ PEDOT (0.2μm) |
| Comparative Example 9 | TAC (40μm)/PVA (21μm)/TAC (40μm)/ inorganic filler-containing HC (20μm) PEDOT (2μm) | TAC (40μm)/PVA (21μm)/TAC (40μm)/ inorganic filler-containing HC (30μm)/ PEDOT (0.2μm) |

TAC film: triacetyl cellulose (Fuji)

- PVA film: polyvinyl alcohol
- Inorganic filler-containing HC: Hard coating composition prepared according to Preparation Example 2-1
- Inorganic filler-free HC: Hard coating composition prepared according to Preparation Example 2-2
- PEDOT: Transparent conductive layer formed according to Preparation Example 3

**Experimental Example: Evaluation of Compressive Properties and Process Defects**

**(1) Measurement of Martens Hardness of First and Second Laminates**

The polarizing plate-transparent conductive layer laminates according to Table 1 above was subjected to an indentation test according to the procedure specified in ISO14577. As a tester, a Nanoindenter (HM500, FISHER) was used, and as an indenter, a pyramidal diamond indenter having a square base and a facing angle of 136° was used. Specifically, in the measurement method, the laminate of each of the Examples and the Comparative Examples was fixed onto soda lime glass of several hundred μm using a pressure-sensitive adhesive having a thickness of about 5 μm, the

load application time and the load removal times were each set to 15 seconds, and the evaluation was conducted. The temperature during the test was 23°C. When the indenter was pressed into the surface of the polarizing plate-transparent conductive layer laminate at a constant speed and a load of 1 mN was applied for 15 seconds, the Martens hardness (MPa) was measured using a nanoindenter. The results are shown in Table 2 below. The Martens hardness was calculated by dividing the test load (F) by the surface area (As) of the indenter penetrating beyond the zero point of the contact, as expressed in Equation 1 below.

$$<\text{Equation 1}>$$

$$\text{Martens hardness (MPa)} = F/As$$

**(2) Measurement of Elastic Recovery Rate of First and Second Laminates**

For the polarizing plate-transparent conductive layer laminates manufactured according to Table 1 above, the elastic recovery rate (nIT= Welast/Wtot) was measured using a nanoindenter (HM500, FISHER), and the results are shown in Table 2 below. Specifically, when a load of 1 mN was applied to the substrate surface of the polarizing plate for 15 seconds using a nanoindenter with a triangular pyramid tip (Vickers tip), the elastic recovery rate (%) was measured using the nanoindenter, and the results are shown in Table 2 below.

**(3) Evaluation of Process Defects in Optical Laminate**

A sealant (UVF-006, 70,000 mPa·s, SEKISUI) was applied onto the transparent conductive layer of each of the manufactured first and second laminates using a sealant dispenser (SHOTmini 200Ωx, MUSASHI Co., Ltd.) with a sharp needle (SPN-0.25-12.7L) at a discharge pressure of 200 mPa according to the product size drawing, and a liquid crystal driven in twisted nematic (TN) mode was injected onto the alignment film using the ODF process. Thereafter, in a state in which the transmission axes of the first polarizing plate and the second polarizing plate were arranged at 90° with each other and the machine directions (MD) were arranged parallel to each other (0°) in the plane direction, the polarizing plates were bonded to each other at a pressure of 3 kg/cm$^2$, and then UV curing (500 mJ/cm$^2$) was performed along the sealant line.
The driving results of the manufactured optical laminates were visually observed and the process performance for appearance defects such as bubbles and black spots and whether or not the optical laminate was driven was evaluated. The results of the evaluation are shown in Table 2 below.

<Criteria for evaluation>

- Excellent: No black spot, and normal driving
- Black spot defect: Black spot present, and poor driving
- Curl defect: Curl occurred during bonding

[Table 2]

| | First laminate | | Second laminate | | Evaluation of process defects |
|---|---|---|---|---|---|
| | Compressive properties | | | | |
| | HM (N/mm$^2$) | nIT (%) | HM (N/mm$^2$) | nIT (%) | |
| Example 1 | 400 | 85 | 400 | 85 | Excellent |
| Example 2 | 100 | 42 | 100 | 42 | Excellent |
| Example 3 | 270 | 65 | 100 | 42 | Excellent |
| Example 4 | 210 | 52 | 180 | 49 | Excellent |
| Example 5 | 180 | 49 | 210 | 52 | Excellent |
| Example 6 | 100 | 42 | 270 | 65 | Excellent |

(continued)

| | First laminate | | Second laminate | | Evaluation of process defects |
|---|---|---|---|---|---|
| | Compressive properties | | | | |
| | HM (N/mm$^2$) | nIT (%) | HM (N/mm$^2$) | nIT (%) | |
| Comparative Example 1 | 100 | 38 | 100 | 38 | Black spot defect |
| Comparative Example 2 | 100 | 38 | 400 | 85 | Black spot defect |
| Comparative Example 3 | 90 | 42 | 400 | 85 | Black spot defect |
| Comparative Example 4 | 400 | 85 | 100 | 38 | Black spot defect |
| Comparative Example 5 | 400 | 85 | 90 | 42 | Black spot defect |
| Comparative Example 6 | 450 | 88 | 210 | 52 | Curl defect |
| Comparative Example 7 | 420 | 88 | 210 | 52 | Curl defect |
| Comparative Example 8 | 210 | 52 | 450 | 88 | Black spot defect |
| Comparative Example 9 | 210 | 52 | 420 | 88 | Black spot defect |

The Martens hardness (HM) and elastic recovery rate (nIT) of the polarizing plate-transparent conductive layer laminate as shown in FIG. 2 were measured, and the results are shown in Table 2 above. In the case of Examples 1 to 6, in which an optical laminate was manufactured, which included a polarizing plate-transparent conductive layer laminate, both the first laminate and the second laminate of which satisfied a Martens hardness of 100 N/mm$^2$ to 430 N/mm$^2$ and an elastic recovery rate (nIT) of 40% to 87%, no bubbles or black spots were observed with the naked eye, and driving was also smooth, indicating that no process defects occurred. On the other hand, in the case of Comparative Examples 1 to 9, in which at least any one of the first laminate and second laminate included in the optical laminate did not satisfy a Martens hardness of 100 N/mm$^2$ to 430 N/mm$^2$ or an elastic recovery rate (nIT) of 40% to 87%, the appearance was poor and driving was also not smooth, indicating that it impossible to use the optical laminate as an optical laminate to be included in a smart window.

**Claims**

1. An optical laminate comprising:

   a first laminate comprising a first polarizing plate and a first transparent conductive layer;
   a second laminate opposite to the first laminate and comprising a second polarizing plate and a second transparent conductive layer; and
   a liquid crystal layer disposed between the first laminate and the second laminate,
   wherein the first laminate and the second laminate each have a Martens hardness (HM) of 100 N/mm$^2$ to 430 N/mm$^2$ and an elastic recovery rate (nIT) of 40% to 87%, as measured when a pressing load of 1 mN is applied thereto for 15 seconds using a nanoindenter.

2. The optical laminate of claim 1, wherein the first polarizing plate and the second polarizing plate each independently have a thickness of 30 to 300 $\mu$m.

3. The optical laminate of claim 1 or 2, wherein the first laminate and the second laminate each independently comprises a hard coating layer, wherein the hard coating layer is formed to have a thickness of 3 to 25 $\mu$m and comprises an inorganic filler.

4. The optical laminate of claim 3, wherein the inorganic filler comprises silica particles having an average particle size of 20 nm or less.

5. The optical laminate of one of claim 1 to 4, further comprising a first glass on an outer portion of the first laminate, and further comprising a second glass on an outer portion of the second laminate.

6. The optical laminate of claim 4, further comprising a first bonding layer between the first laminate and the first glass, and further comprising a second bonding layer between the second laminate and the second glass, wherein the first and second bonding layers each comprise at least one selected from poly vinyl butyral (PVB) and ethylene vinyl acetate (EVA).

7. The optical laminate of one of claim 1 to 6, wherein at least one of the first transparent conductive layer and the second transparent conductive layer is formed in direct contact with the first polarizing plate or the second polarizing plate without comprising a separate substrate therebetween.

8. The optical laminate of one of claim 1 to 7, wherein at least one of the first polarizing plate and the second polarizing plate comprises at least one functional layer selected from the group consisting of a protective layer, a retardation matching layer, and a refractive index-matching layer.

9. A smart window comprising the optical laminate of any one of claims 1 to 8.

**FIG. 1**

| 210 |
|---|
| 310 |
| 400 |
| 320 |
| 220 |

**FIG. 2**

| 310 |
|---|
| 210 |

FIG. 3a

| |
|---|
| 110 |
| 111 |
| 210+310 |
| 400 |
| 220+320 |
| 121 |
| 120 |

FIG. 3b

| |
|---|
| 110 |
| 111 |
| 210+310 |
| 400 |
| 220+320 |
| 121 |
| 120 |

Bubbles and black spots

EP 4 670 969 A1



**FIG. 4a**

**FIG. 4b**

**FIG. 4c**

**FIG. 4d**

**FIG. 4e**

202

201

202

203

Europäisches
Patentamt

European
Patent Office

Office européen
des brevets

# EUROPEAN SEARCH REPORT

**Application Number**

EP 25 18 4386

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2023/140516 A1 (DONGWOO FINE CHEM CO LTD [KR]) 27 July 2023 (2023-07-27)<br>* abstract; figure 2 *<br>& EP 4 468 073 A1 (DONGWOO FINE CHEM CO LTD [KR]) 27 November 2024 (2024-11-27)<br>* paragraphs [0001], [0014], [0050], [0051], [0060] - [0068], [0120], [0145]; figure 2 * | 1-9 | INV.<br>B32B17/10<br>G02B5/30<br>G02F1/1335 |
| A | US 2023/341591 A1 (TANAKA YOSHIKO [US] ET AL) 26 October 2023 (2023-10-26)<br>* paragraph [0114] * | 1-9 | |

|  |
|---|
| TECHNICAL FIELDS SEARCHED (IPC) |
| B32B<br>G02F<br>G02B |

The present search report has been drawn up for all claims

| Place of search | Date of completion of the search | Examiner |
|---|---|---|
| The Hague | 13 November 2025 | Aspeby, Erika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.....................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 4386

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2025

| Patent document cited in search report | Publication date | Patent family member(s) | Publication date |
|---|---|---|---|
| WO 2023140516 A1 | 27-07-2023 | CN 118541635 A | 23-08-2024 |
| | | EP 4468073 A1 | 27-11-2024 |
| | | JP 2025503900 A | 06-02-2025 |
| | | KR 102524845 B1 | 24-04-2023 |
| | | US 2025347952 A1 | 13-11-2025 |
| | | WO 2023140516 A1 | 27-07-2023 |
| US 2023341591 A1 | 26-10-2023 | CN 116157725 A | 23-05-2023 |
| | | JP WO2022071466 A1 | 07-04-2022 |
| | | KR 20230073204 A | 25-05-2023 |
| | | TW 202224925 A | 01-07-2022 |
| | | US 2023341591 A1 | 26-10-2023 |
| | | WO 2022071466 A1 | 07-04-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018010035 A